# FASCICULE DE BREVET EUROPEEN

(11) **EP 0 963 333 B1**
(45) Date de publication et mention de la délivrance du brevet: **21.03.2001**
(21) Numéro de dépôt: 98959974.1
(22) Date de dépôt: 14.12.1998
(51) Int. Cl.: B65G 47/84

(54) **ROUE DENTEE DE TRANSFERT POUR PREFORMES OU RECIPIENTS**
STERNRAD-FÖRDERER FÜR VORFORMLINGEN ODER BEHÄLTER
COG WHEEL FOR TRANSFERRING PREFORMS OR CONTAINERS

(30) Priorité: 16.12.1997 FR 9715926
(43) Date de publication de la demande: 15.12.1999
(73) Titulaire: ADS, 95310 Saint Ouen l'Aumône (FR)
(72) Inventeur: COCHIN, François, F-75017 Paris (FR)
(74) Mandataire: Chambon, Gérard
(86) Numéro de dépôt international: FR9802714
(87) Numéro de publication internationale: WO9930994

(56) Documents cités:
- EP-A- 0 629 569
- US-A- 4 239 116
- US-A- 5 501 552

## Description

L'invention concerne une roue dentée de transfert selon le préambule de la revendication 1 prévue pour préformes ou récipients comportant chacun une bague ou goulot muni d'une collerette.

Une telle roue de transfert est décrite dans le document US-A-5 501 552.

Pour fabriquer des bouteilles ou flacons et plus généralement des récipients en matériau thermoplastique, il est connu d'utiliser des préformes obtenues par exemple par injection, qui se présentent sous la forme d'un corps tubulaire fermé à une extrémité tandis que son autre extrémité ouverte est pourvue d'une bague ou goulot généralement muni d'une collerette.

Les corps des préformes doivent subir un traitement thermique avant d'être expansés au cours d'une opération de moulage par soufflage ou étirage-soufflage.

Dans une chaîne de fabrication de ce type, les préformes et/ou les récipients obtenus par soufflage circulent d'un poste de fabrication à l'autre et même dans certains postes eux-mêmes comme par exemple un four thermique pour préformes.

Pour convoyer les préformes et/ou les récipients, il est connu de les soutenir et les guider dans des rails sur lesquels ils prennent appui par leur collerette.

Dans certains cas, il est nécessaire de réaliser un renvoi d'angle par exemple pour faire passer des préformes, d'un poste d'alimentation pourvu d'un rail incliné, vers le four de traitement thermique et il est alors connu d'utiliser une roue dentée de transfert, lesdites préformes étant soutenues par leur collerette, au cours de la rotation de la roue, entre des zones ou postes respectivement d'arrivée et d'évacuation prévus au voisinage de la périphérie de ladite roue.

La roue dentée est constituée d'une seule pièce et il peut arriver dans certains cas qu'une préforme ou un récipient se coince entre la face d'attaque d'une dent et le rail de guidage, entraînant le blocage de la roue et par le fait, le blocage des autres moyens mus par le même moteur (un seul moteur est généralement utilisé pour divers moyens en raison de problèmes de synchronisme), comme par exemple le système d'avancement des préformes dans le four de traitement thermique, ce qui entraîne bien évidemment dans ce cas une perte des préformes ayant séjourné trop longuement dans ledit four et une perte de temps pour la remise en fonctionnement.

Même si l'on utilisait plusieurs moteurs indépendants pour éviter une perte dans un poste disposé en aval dans la chaîne de fabrication, outre le problème de surcoût et toutes les difficultés de synchronisme et de recalage ultérieurs des moteurs, le blocage de la roue de transfert resterait quand même un gros inconvénient.

C'est pourquoi l'inventeur a imaginé une roue dentée de transfert selon la revendication 1 qui est notamment remarquable en ce qu'elle est pourvue d'une pluralité de dents périphériques indépendantes qui sont montées pivotantes sur un axe et qui sont prévues chacune pour entraîner une préforme ou récipient au cours de la rotation de la roue tandis que chaque dent peut pivoter dans le sens inverse de la rotation de la roue et libérer la préforme ou récipient en cas de résistance à l'entraînement, supérieure à la force d'un moyen de rappel élastique prévu pour solliciter ladite dent vers sa position normale d'entraînement.

De la sorte, il n'y a plus de problème de blocage et donc aussi de perte d'un grand nombre de produits dans un poste de fabrication, même si pour certains postes (par exemple pour le moulage), la détection d'une préforme manquante dans la chaîne entraîne le rejet d'un certain nombre relativement réduit desdites préformes, pour des raisons de manipulation des préformes par lot.

Avantageusement, les dents sont imbriquées les unes dans les autres et présentent des surfaces de contact entre elles en forme de S, tandis que leur axe de pivotement est déporté vers l'avant par rapport au sens de rotation de la roue de telle sorte que chaque dent peut pivoter par coopération de ses formes, respectivement concave et convexe, avec les formes, respectivement convexe et concave, des dents qui l'entourent et dans ce cas, chaque dent peut présenter, par exemple, un talon à l'extrémité arrière de sa forme en S, qui assure sa retenue et son calage en position sur la dent suivante par rapport au sens de rotation de la roue, que ladite dent suivante soit immobile en pivotement ou en cours de pivotement.

Selon un mode de réalisation, la roue comporte un plateau qui ménage un palier de pivotement pour chaque dent, dans lequel est monté libre l'axe de pivotement de ladite dent, ledit axe étant solidaire en rotation avec cette dernière, tandis que le moyen élastique de rappel pour chaque dent est, par exemple, constitué par un ressort hélicoïdal de torsion disposé autour de l'axe de pivotement de ladite dent et dont une extrémité est solidaire du plateau et l'autre solidaire en rotation avec ledit axe de pivotement.

Dans ce cas, selon un mode de réalisation, l'extrémité du ressort de torsion solidaire en rotation avec l'axe de pivotement, est fixée entre une partie de ce dernier et une partie d'un manchon qui entoure ledit ressort et qui est solidaire en rotation avec ledit axe.

L'invention sera bien comprise et d'autres particularités apparaîtront à la lecture de la description qui va suivre et qui se réfère aux dessins annexés dans lesquels:
- la figure 1 est une vue en plan par-dessus d'une roue selon l'invention, disposée dans un bâti,
- la figure 2 est une vue en perspective de l'ensemble représenté sur la figure 1, dent ayant pivoté,
- la figure 3 est une coupe diamétrale de la roue des figures 1 et 2,
- la figure 4 est un agrandissement d'une partie de la figure 2.

La roue dentée 1 représentée sur les dessins est montée rotative, ici dans le sens horaire, dans un bâti 2 qui forme avec ladite roue une voie de circulation circulaire 3 pour des préformes 4, mais il pourrait s'agir aussi de récipients finis ou semi-finis.

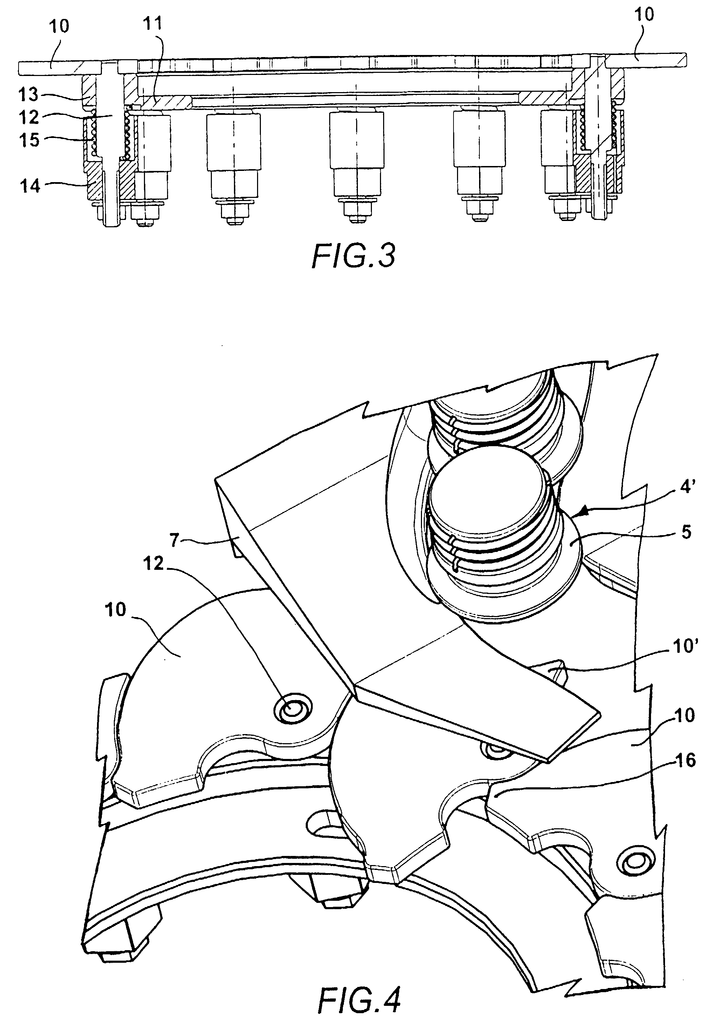

Chaque préforme, comme le montrent les dessins, comporte une bague ou goulot muni d'une collerette, telle que la collerette 5 bien visible sur la figure 4, mais il est clair qu'au lieu de préformes, il pourrait s'agir de récipients finis.

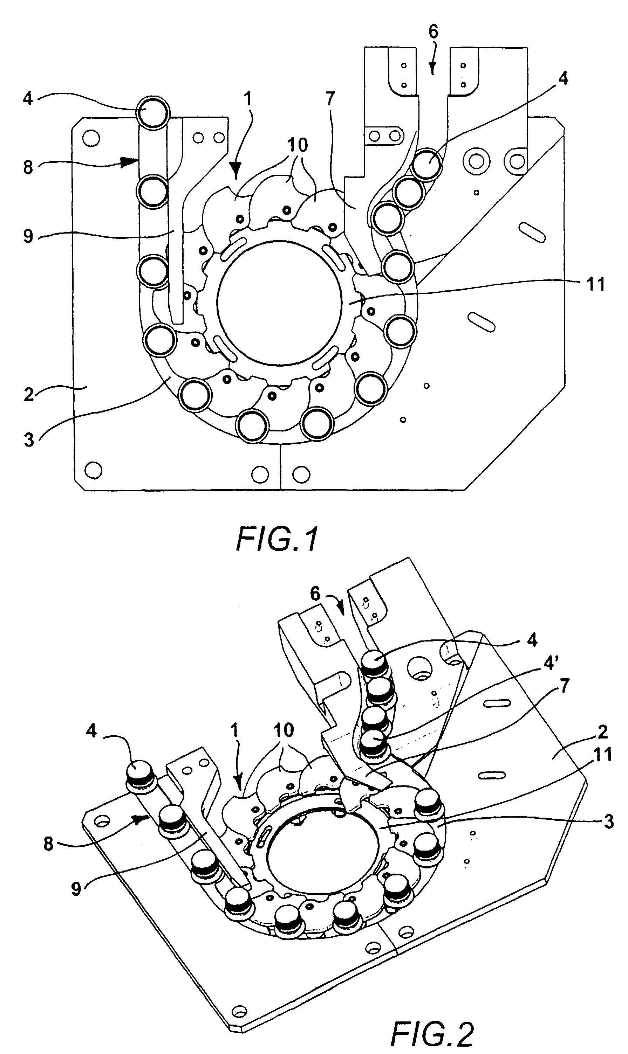

La roue représentée est, par exemple, prévue pour servir de renvoi d'angle entre un poste d'alimentation 6 des préformes qui arrivent par exemple sur un rail incliné, éventuellement muni ici d'un guide 7, et un poste d'évacuation 8, pourvu ici d'un guide 9, d'où les préformes sont ensuite convoyées vers un poste aval tel qu'un four de réchauffage (figures 1 et 2).

Dans l'exemple représenté, les préformes arrivent et sont évacuées de manière sensiblement tangentielle à la roue 1.

On comprend que les préformes 4 sont guidées et maintenues au cours de leur déplacement par leur collerette 5.

La voie de circulation 3 est constituée par une partie circulaire du bâti 2 et la périphérie de la roue 1 qui comporte une pluralité de dents 10 profilées comme le montrent les dessins, pour entraîner chaque préforme du poste 6 au poste 8.

Chaque dent est montée pivotante sur un plateau annulaire 11, monté rotatif dans le bâti 2.

A cet effet, chaque dent 10 est solidaire en rotation d'un axe 12, plus particulièrement visible sur la figure 3, lequel axe est monté libre en pivotement dans un palier 13 du plateau 11.

L'axe de pivotement 12 de chaque dent est solidaire en rotation d'un manchon 14 tandis qu'un ressort hélicoïdal de torsion 15 est disposé dans le manchon et autour de l'axe 12, ses extrémités étant fixées au plateau 11 et respectivement à l'axe 12 et/ou au manchon 14 (en fait ici ladite extrémité est serrée entre une partie de l'axe 12 et une partie dudit manchon 14).

Le ressort 15 est tel qu'il sollicite la dent 10 à venir prendre sa position de travail, c'est-à-dire selon les dessins, en exerçant une force de rappel dans le même sens horaire que la rotation de la roue 1.

Comme le montrent bien les dessins, les dents s'imbriquent les unes dans les autres et présentent chacune un profil frontal et un profil postérieur formant des surfaces de contact en S tandis que l'axe de pivotement est déporté vers l'avant par rapport au sens de rotation de la roue 1.

Ces formes particulièrement originales et étudiées permettent ainsi à chaque dent de pivoter vers l'intérieur dans un sens anti-horaire à l'encontre de la sollicitation du ressort 15, les parties concaves et convexes d'une dent pouvant se mouvoir dans les parties respectivement convexes et concaves des dents qui l'entourent, comme le montrent bien les figures 2 et 4 représentant une dent 10' ayant pivoté entre deux dents 10.

En outre, on comprend que le talon arrière d'une dent (arrière par rapport au sens de rotation de la roue), lequel est référencé en 16 sur la figure 4 et qui est constitué par l'extrémité concave de la forme en S, permet à chaque dent de prendre appui et se caler en position sur la dent suivante (toujours par rapport au sens de la rotation), que ladite dent suivante soit immobile en pivotement ou en cours de pivotement.

Si les figures 2 et 4, montrent une dent 10' ayant pivoté, c'est à cause d'une préforme 4' qui, par incident, n'a pas pu être prise correctement par la dent 10'.

Si la dent 10' n'était pas montée de manière pivotante, on comprend que la préforme 4' serait restée coincée entre la dent 10' et son rail de guidage, entraînant le blocage en rotation de la roue 1 avec tous les inconvénients mentionnés ci-avant.

Au contraire, ici, après le pivotement de la dent 10', la préforme 4' sera entraînée par l'une des dents suivantes après éventuellement des pivotements de certaines d'entre elles à moins que ladite préforme ne soit retirée par l'opérateur, étant entendu que chaque dent ayant pivoté reprendra sa position d'entraînement sous l'effet du ressort de rappel 15 (figure 3).

Enfin, on peut également voir sur les dessins que le renvoi d'angle est ici d'environ 180° mais il pourrait l'être de 90° ou moins.

## Revendications

1. Roue dentée (1) de transfert pour préformes (4,4') ou récipients comportant chacun une bague ou goulot muni d'une collerette (5), lesdites préformes ou récipients étant soutenus par leur collerette (5), au cours de la rotation de la roue (1), entre des zones ou postes respectivement d'arrivée (6) et d'évacuation (7) prévus au voisinage de la périphérie de ladite roue, roue caractérisée en ce qu'elle est pourvue d'une pluralité de dents (10) périphériques indépendantes qui sont montées pivotantes sur un axe (12) et qui sont prévues chacune pour entraîner une préforme (4,4') ou récipient au cours de la rotation de la roue tandis que chaque dent (10) peut pivoter dans le sens inverse de la rotation de la roue (1) et libérer la préforme (4') ou récipient en cas de résistance à l'entraînement, supérieure à la force d'un moyen de rappel élastique prévu pour solliciter ladite dent vers sa position normale d'entraînement.

2. Roue dentée (1) de transfert selon la revendication 1, caractérisée en ce que les dents sont imbriquées les unes dans les autres et présentent des surfaces de contact entre elles en forme de S, tandis que leur axe (12) de pivotement est déporté vers l'avant par rapport au sens de rotation de la roue de telle sorte que chaque dent peut pivoter par coopération de ses formes, respectivement concave et convexe, avec les formes, respectivement convexe et concave, des dents qui l'entourent.

3. Roue dentée (1) de transfert selon la revendication 2, *caractérisée* en ce que chaque dent (10) présente un talon (16) à l'extrémité arrière de sa forme en S, qui assure sa retenue et son calage en position sur la dent suivante par rapport au sens de rotation de la roue, que ladite dent suivante soit immobile en pivotement ou en cours de pivotement.

4. Roue dentée (1) de transfert selon l'une des revendications 1 à 3, *caractérisée* en ce que la roue comporte un plateau (11) qui ménage un palier (13) de pivotement pour chaque dent (10), dans lequel est monté libre l'axe de pivotement (12) de ladite dent, ledit axe étant solidaire en rotation avec cette dernière.

5. Roue dentée (1) de transfert selon la revendication 4, caractérisée en ce que le moyen élastique de rappel pour chaque dent (10) est un ressort hélicoïdal (15) de torsion disposé autour de l'axe de pivotement (12) de ladite dent et dont une extrémité est solidaire du plateau (11) et l'autre solidaire en rotation avec ledit axe de pivotement (12).

6. Roue dentée (1) de transfert selon la revendication 5, *caractérisée* en ce que l'extrémité du ressort de torsion (15) solidaire en rotation avec l'axe de pivotement (12), est fixée entre une partie de ce dernier et une partie d'un manchon (14) qui entoure ledit ressort et qui est solidaire en rotation avec ledit axe (12).

## Patentansprüche

1. Förderzahnrad (1) für Vorformlinge (4, 4') oder Behälter, deren jeder einen Ring oder Hals mit einem Kragen (5) aufweist, wobei diese Vorformlinge oder Behälter während der Drehung des Rads (1) zwischen einer Eintrittszone bzw. -station (6) und einer Austrittszone bzw. -station (7), die in Nähe des Umfangs des Rads vorgesehen sind, über ihren Kragen (5) getragen werden, dadurch gekennzeichnet, daß es an seinem Umfang mit einer Vielzahl von unabhängigen Zähnen (10) versehen ist, die auf einer Achse (12) verschwenkbar montiert sind und die jeweils zur Mitnahme eines Vorformlings (4, 4') oder Behälters während der Drehung des Rads vorgesehen sind, während jeder Zahn (10) sich in der der Drehrichtung des Rads (1) entgegengesetzten Richtung verschwenken und den Vorformling (4, 4') oder Behälter freigeben kann, und zwar im Fall eines Widerstands gegen die Mitnahme, der größer als die Kraft einer elastischen Rückholeinrichtung ist, die dazu vorgesehen ist, diesen Zahn auf seine normale Mitnahmestellung zu zu belasten.

2. Förderzahnrad (1) nach Anspruch 1, dadurch gekennzeichnet, daß die Zahnräder ineinandergreifen und S-förmige gegenseitige Kontaktflächen aufweisen, während ihre Schwenkachse (12) bezüglich der Drehrichtung des Rads nach vorne versetzt ist, so daß sich jeder Zahn durch Zusammenwirken seiner konkaven bzw. konvexen Form mit der konvexen bzw. konkaven Form der ihn umgebenden Zähne verschwenken kann.

3. Förderzahnrad (1) nach Anspruch 2, dadurch gekennzeichnet, daß jeder Zahn (10) am hinteren Ende seiner S-Form einen Fuß (16) aufweist, der seine Zurückhaltung und Positionierung auf dem bezüglich der Drehrichtung des Rads folgenden Zahn gewährleistet, und zwar unabhängig davon, ob dieser folgende Zahn nicht verschwenkt ist oder gerade verschwenkt wird.

4. Förderzahnrad (1) nach einem der Ansprüche 1 bis 3, dadurch gekennzeichnet, daß das Rad eine Scheibe (11) aufweist, die für jeden Zahn (10) ein Schwenklager (13) bildet, in dem die Schwenkachse (12) dieses Zahns frei montiert ist, wobei diese Achse mit diesem drehfest verbunden ist.

5. Förderzahnrad (1) nach Anspruch 4, dadurch gekennzeichnet, daß die elastische Rückholeinrichtung für jeden Zahn (10) eine Schraubentorsionsfeder (15) ist, die die Schwenkachse (12) des Zahns umgibt und deren eines Ende mit der Scheibe (11) fest verbunden ist und deren anderes mit der Schwenkachse (12) drehfest verbunden ist.

6. Förderzahnrad (1) nach Anspruch 5, dadurch gekennzeichnet, daß das mit der Schwenkachse (12) drehfest verbundene Ende der Torsionsfeder (15) zwischen einem Teil dieser Schwenkachse und einem Teil einer Buchse (14) befestigt ist, die die Feder umgibt und mit der Achse (12) drehfest verbunden ist.

## Claims

1. Toothed transfer wheel (1) for preforms (4, 4') or containers each comprising a ring or neck provided with a collar (5), said preforms or containers being supported by their collar (5), in the course of rotation of the wheel (1), between inlet (6) and discharge (7) zones or stations respectively provided in the vicinity of the periphery of said wheel, said wheel being characterised in that it is provided with a plurality of independent peripheral teeth (10) which are mounted pivoting on a shaft (12) and which are each designed to entrain a preform (4, 4') or container in the course of rotation of the wheel whereas each tooth (10) can pivot in the opposite direction to the rotation of the wheel (1) and release the preform (4') or container in the event of resistance to entrainment greater than the force of an elastic return means designed to pull said tooth into its normal entrainment position.

2. Toothed transfer wheel (1) according to claim 1, characterised in that the teeth are imbricated in one another and exhibit S-shaped contact surfaces between them, whereas their pivoting shaft (12) is offset towards the front in relation to the direction of rotation of the wheel such that each tooth can pivot through co-operation of its concave and convex forms respectively with the convex and concave forms respectively of the teeth which surround it.

3. Toothed transfer wheel (1) according to claim 2, characterised in that each tooth (10) exhibits a heel (16) at the rear end of its S-shape which effects its retention and locking in position on the following tooth in relation to the direction of rotation of the wheel, whether said following tooth is immobile pivotably or pivoting.

4. Toothed transfer wheel (1) according to one of claims 1 to 3, characterised in that the wheel comprises a plate (11) which forms a pivot bearing (13) for each tooth (10) in which the pivoting shaft (12) of said tooth is mounted freely, said shaft being locked in rotation with the latter.

5. Toothed transfer wheel (1) according to claim 4, characterised in that the elastic return means for each tooth (10) is a helical torsion spring (15) disposed about the pivoting shaft (12) of said tooth and one end of which is locked to the plate (11) and the other end of which is locked in rotation with said pivoting shaft (12).

6. Toothed transfer wheel (1) according to claim 5, characterised in that the end of the torsion spring (15) locked in rotation with the pivoting shaft (12) is fixed between a portion of the latter and a portion of a sleeve (14) which surrounds said spring and which is locked in rotation with said shaft (12).
